# EUROPEAN PATENT SPECIFICATION

(11) **EP 4 441 991 B1**
(45) Date of publication and mention of the grant of the patent: **15.07.2026**
(21) Application number: 22838941.7
(22) Date of filing: 01.12.2022
(51) Int. Cl.: H04M 3/428, H04M 3/56

(54) **METHOD FOR OPERATING A DEVICE OR A NETWORK SERVER IMPLEMENTING A COMMUNICATION HOLD SERVICE**
VERFAHREN ZUM BETRIEB EINER VORRICHTUNG ODER EINES NETZWERKSERVERS ZUR IMPLEMENTIERUNG EINES KOMMUNIKATIONSHALTEDIENSTES
PROCÉDÉ DE FONCTIONNEMENT D'UN DISPOSITIF OU D'UN SERVEUR RÉSEAU METTANT EN OEUVRE UN SERVICE DE MAINTIEN DE COMMUNICATION

(30) Priority: 03.12.2021 WO PCT/CN2021/135358
(43) Date of publication of application: 09.10.2024
(73) Proprietor: Orange, 92130 Issy-les-Moulineaux (FR)
(72) Inventor: WANG, Xin, Beijing 100013 (CN)
(74) Representative: Regimbeau
(86) International application number: PCT/IB2022/000710
(87) International publication number: WO 2023/099958

(56) References cited:
- US-A1- 2007 223 673
- US-A1- 2009 316 870
- US-B1- 6 353 662

## Description

### FIELD OF THE INVENTION

The field of this invention is that of devices such as mobiles phones. More particularly, the invention relates to a method for operating such a device while being engaged in a first call.

### BACKGROUND OF THE INVENTION

With devices such as mobile phones, it is common to receive a phone call from a calling party, while already being engaged in a call with another party.

The "Communication hold service", as defined in the 3GPP specification TS 24.610, lets the called party pause the initial call (to take the new incoming call for instance) and place said other party of the initial call on hold, without ending the initial call. Usually, the other party which is placed on hold hears a pre-configured announcement message.

The called party can resume the initial call at any time by either terminating the new incoming call, or placing the calling party of this new call on hold (i.e. switching the party which is on-hold).

Said communication hold service works well, but when the initial call is a multi-party call (a conference), if a party places on hold such a multi-party call, this announcement message will interrupt the conference for all the other parties until the call is resumed by the party which placed on hold this call. It will reduce the continuity of user experience for all the participants on the conference call. In the worst case, a music is continuously played as long as the communication is held, and the conference is disturbed.

There is still the possibility to deactivate the communication hold service when in a conference to avoid such situation, but a party receiving an incoming call would have no option other than leaving the conference to accept an incoming call. One prior art example disclosing muting the hold service is US2007223673. Therein, The muting can be controlled by any participant or automatically by a computer (e.g. the conference server).

There is therefore a need for improving the user experience in multi-party calls.

### SUMMARY OF THE INVENTION

For these purposes, the present invention provides according to a first aspect a method for operating a device, according to claim 1.

Preferred but non limiting features of the present invention are as follow:
- The method further comprises detecting, during said first call, that the user of the device no longer wishes to avoid disturbing said first call; and instructing said network server to re-enable playing the announcement message if the communication hold service is triggered.
- The method further comprises instructing said network server to trigger the communication hold service when a second call is received at the device.
- The method comprises a prior step (a0) of receiving said second call at the device, which triggers performing steps (a) and (b).
- The instructing step comprises sending an instruction to said network server to trigger the communication hold service with or without playing the announcement message to said other party of said first call depending on the result of step (a).
- The communication hold service is pursuant to 3GPP TS 24.610, and said network server is a SIP application server.
- The network server is instructed to disable (b) or re-enable (d) playing the announcement message through a SIP INVITE request.
- The SIP INVITE request for instructing to disable or re-enable playing the announcement message is the SIP INVITE request for instructing said network server to trigger the communication hold service.
- The first call is a multi-party conference call.

In a second aspect, the invention proposes a method for operating a network server according to claim 10.

In a third aspect, the invention proposes an electronic device according to claim 11.

In a fourth aspect, the invention proposes a network server according to claim 12.

According to a fifth and a sixth aspects, the invention provides a computer program product, according to claim 13;

### BRIEF DESCRIPTION OF THE DRAWINGS

The above and other objects, features and advantages of this invention will be apparent in the following detailed description of an illustrative embodiment thereof, which is to be read in connection with the accompanying drawings wherein:
- figure 1 illustrates an example of architecture in which the methods according to the invention are performed;
- figures 2a and 2b respectively illustrates how the communication service with or without announcement is defined in the 3GPP TS 24.610;
- figure 3 illustrates a first embodiment of the method according to the first aspect invention;
- figure 4 illustrates how the invention applies to the communication service as defined in the 3GPP TS 24.610;
- figure 5 illustrates a second embodiment of the method according to the first aspect of the invention; and
- figure 6 illustrates an embodiment of the method according to the second aspect of the invention.

### DETAILED DESCRIPTION OF A PREFERRED EMBODIMENT

### Architecture

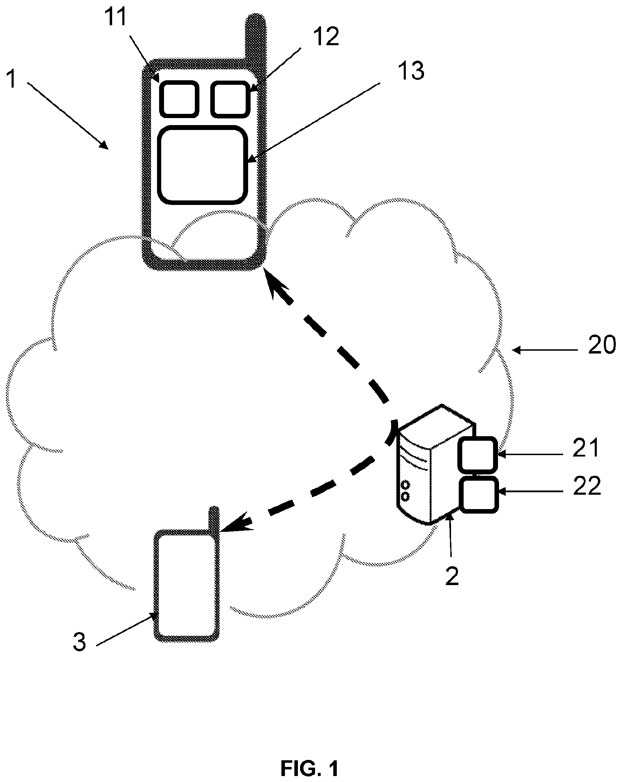

The present invention relates to a method for operating a device 1 as represented by **figure 1****.** As explained the device comprises a processing unit 11, i.e. a CPU (one of mode processors). The device 1 is able to handle a phone call, meaning that it comprises a user interface 13 including at least a audio input (for instance a microphone) and a audio output (for instance loud speaker). It is to be understand that the device 1 may just comprise a connector for a headset.

The device 1 typically further comprises a memory 12 (for example flash memory) and the user interface 13 generally includes a screen (possibly touch sensitive), and a vibration module.

The device 1 also typically comprises a battery for powering the processing unit 11 and other units. The device 1 may further comprise others units such as a location unit for providing location data representative of the position of the device 1 (using for example GPS, network triangulation, etc.), further sensors (such as an acceleration sensor, light sensor, etc.), a communication unit for connecting (in particular wirelessly) the device 1 to a network 20 (for example WiFi, Bluetooth, and preferably a mobile network, in particular a GSM/UMTS/LTE network, see below), etc.

This device 1 is typically a smartphone, a tablet computer, a laptop, etc. In the following description the example of a smartphone will be used, but the present invention is not limited to this embodiment as it is well known that computer can nowadays receive phone calls.

As explained, at least one other party 3 is involved, which can be any device similar to the device 1 (a smartphone, a tablet computer, a laptop, etc.).

### Communication hold service

As explained, the "communication hold service" is described by 3GPP TS 24.610. In this specification, it is simply referred to as "HOLD".

In the following description, we will assume that the device 1 is engaged in an ongoing call, referred to as "first call", with at least one other device 3, hereafter also designated as "party". Said first call is preferably a multi-party conference call, i.e. there is a plurality of said other parties 3. We also assume that said first call is through a network server 2 implementing the communication hold service. Said network server 2 is preferably a SIP application server ("AS/MRF" in 3GPP TS 24.610), but the present invention is not limited to this specific embodiment. The network server 2 comprises also a processing unit 21 and a memory 22.

The communication hold service is triggered if, during said first call, the device 1 receive a second call The other party(ies) 3 of the first call become(s) a "held" party.

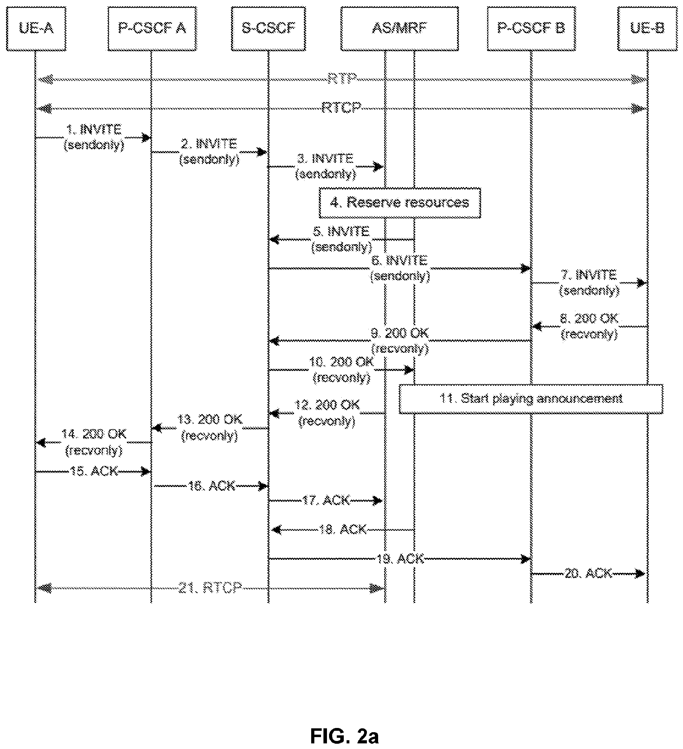

We refer now to **figure 2a** (figure A.1.2.1-1 from 3GPP TS 24.610) which describes a typical embodiment of HOLD with announcement to the held party. It is to be understood that any playable media can be used as "announcement message", including music, advertisement, etc.

In this figure, UE-A are UE-B are the parties of the first call. UE-A is the user device 1 (and the called party of the second call), while UE-B is the device corresponding to another party 3. As explained, there may be a plurality of other parties 3 (devices UE-B) in case of multi-party conference call. The server 2 is referred to as AS/MRF, and we have three "Proxy/Serving Call Session Control Function" entities P-CSCF A, P-CSCF B and S-CSCF involved.

In figure 2a, the following steps are performed:
1. UE-A sends a SIP INVITE request for UE-B to hold the session (because the user of device 1 has accepted the second call). Hold is done by changing the SDP attribute. Note that the same can be achieved by sending an UPDATE request.
2. P-CSCF A forwards the SIP INVITE request towards S-CSCF.
3. S-CSCF forwards the SIP INVITE request towards the AS/MRF.
4. AS/MRF decides to configure an announcement message for UE-B. It acts as a B2B User Agent (UA), inserts MRFP in the media path and reserves resources.
5. AS/MRF sends a SIP INVITE request towards UE-B.
6. S-CSCF forwards the SIP INVITE request towards UE-B.
7. P-CSCF B forwards the SIP INVITE request to UE-B.
8. UE-B sends SIP 200 (OK) response towards AS/MRF.
9. P-CSCF forwards the SIP 200 (OK) response towards AS/MRF.
10. S-CSCF forwards the SIP 200 (OK) response towards AS/MRF.
11.AS/MRF starts playing announcement to UE-B, following the procedures in 3GPP TS 24.628. In case of a plurality of UE-B (multi-party conference), each of them is being played the announcement, hence the conference is disturbed.
12.AS/MRF sends a SIP 200 (OK) response towards UE-A.
13. S-CSCF forwards the SIP 200 (OK) response towards UE-A.
14. P-CSCF A forwards the SIP 200 (OK) response towards UE-A.
15. UE-A sends a SIP ACK request towards AS/MRF.
16. P-CSCF forwards the SIP ACK request towards AS/MRF.
17. S-CSCF forwards the SIP ACK request towards AS/MRF.
18.AS/MRF sends a SIP ACK request towards UE-B.
19. S-CSCF forwards the SIP ACK request towards UE-B.
20. P-CSCF B forwards the SIP ACK request towards UE-B.
21.RTCP packets are exchanged between UE-A and AS/MRF. No RTP packets are sent/received by UE-A.

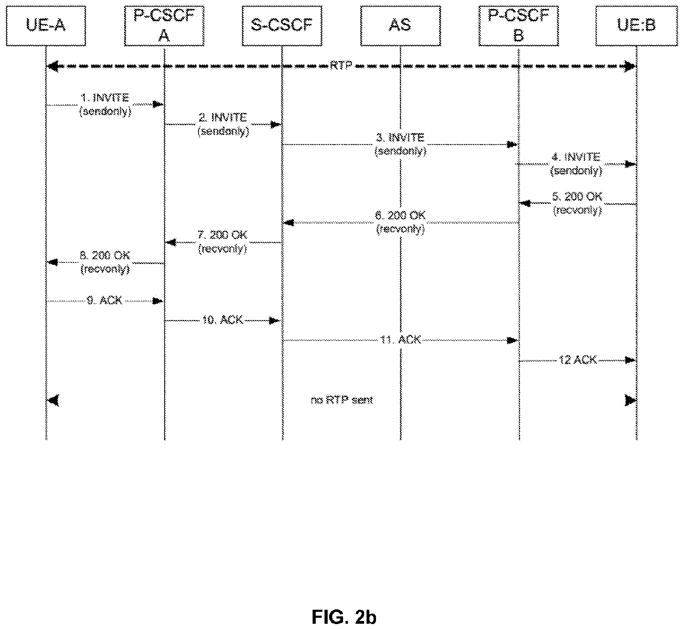

Alternatively, referring now to **figure 2b** (figure A.1.1.1 from 3GPP TS 24.610), we may have HOLD without announcement to the held user. The steps 3-5 and 10-12 of figure 2a are simply skipped, and no announcement is played to UE-B.

This embodiment would be very strange in a normal call (with a single other party), because the other party UE-B would not even know that they have been put on hold by UE-A: they would just realize that they are "alone" in the call in the absence of response from the user of device UE-A.

However, this embodiment makes sense in a multi-party conference call because the conference could continue without disturbance, as the other parties would not even know that they have been put on hold.

On the other hand, in some conference calls, the announcement remains useful, for example if the called party is the host of the conference call.

### Operation of the device

According to a first aspect, the present invention proposes a method for operating the device 1, performed by its processing unit 11, which astutely adds a user-aware function at the UE, and uses it to switch between the mode "hold with announcement" and "hold without announcement". As it will be explained, the present method fully complies with the 3GPP TS 24.610, and just makes clever use of its functionalities.

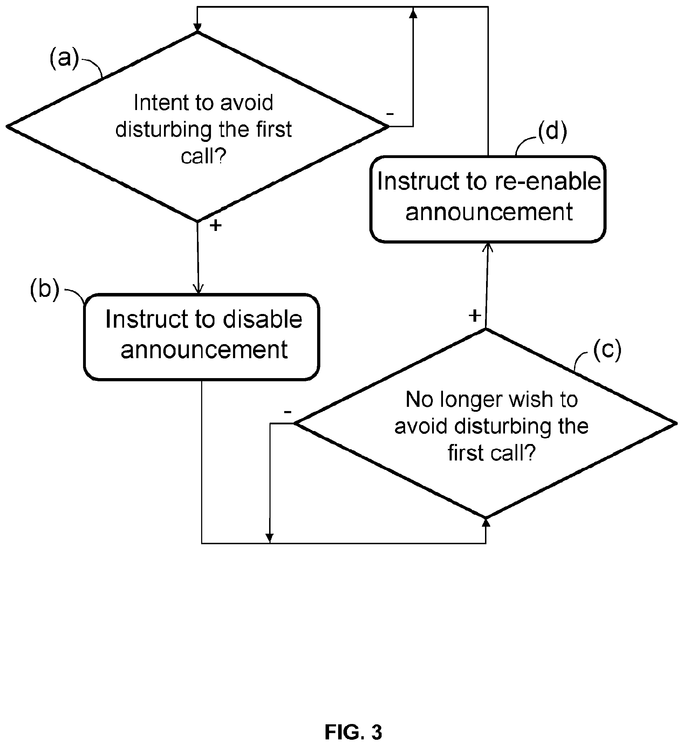

We refer now to **figure** 3 which illustrates a first embodiment of the method according to the present invention.

This method can be implemented by an operating software of the device as handling calls is generally a basic functionality of a device such as a smartphone. Alternatively, the present method can be implemented by a dedicated application such as a "chat" application allowing voice and/or video calls, in particular multi-party calls.

As explained, the device 1 is assumed to be engaged in an ongoing call (the first call) through the network server 2 implementing the communication hold service, and the device 1 has either initiated such first call of has received it form a calling party (i.e. is being requested to handle this call through the user interface 13 of the device 1). In a case of a multi-party conference call, the device 1 can simply connect to the conference call (initiated by another party) for instance through a link provided by the host of the conference.

In a first detecting step (a), the processing unit 11 of the device 1 detects, during said first call, an intent of a user of the device 1 to avoid disturbing said first call. This detecting step (a) may be performed by a user-aware function, typically implemented as a set of computer program instructions installed on device 1.

Such a detection may be based on an analysis of the user's behavior, for instance by detecting that the user has not spoken for a certain amount of time during the first call (for instance since the beginning of the first call) or preferably by monitoring the device configuration and detecting a configuration indicative of the user intention not to disturb the first call, such as (but not limited) toggling on a mute function.

In other words, an intent of a user of the device 1 to avoid disturbing said first call is preferably detected when the user has activated the mute function or when the user has not spoken for a given duration during the first call.

Note that step (a) can be action-triggered (for instance when the mute function is activated, or when a second call is received, see below). Alternatively, a determination whether the user of the device 1 wishes to avoid disturbing said first call can be performed regularly.

In response, in a further instructing step (b), if an intent a user of the device 1 to avoid disturbing said first call has been detected, the processing unit 11 of the device 1 instructs said network server 2 to disable playing the announcement message to said at least one other party 3 of said first call if the communication hold service is triggered.

In other words, the configuration of the server 2 is modified, and the hold service is switched from the embodiment "with announcement" of figure 2a to the embodiment "without announcement" of figure 2b.

As an illustrative example, when multiple participants are on the call, usually when a user of device 1 does not want to interrupt the conference, this user will activate the mute function on this device 1. The detection, by the user-aware function, of the UE mute function being toggled on will lead this user-aware function to determine that the user indeed wants to avoid disturbing the first call. This triggers an instruction, prepared by the user-aware function, to the network server not to play the announcement message as it would normally do, in other words to disable the announcement playing function installed at this network server.

This way, the network server 2 will not play the announcement in case the conference call is put on hold by the user of the device 1, so the other parties in the conference call will not hear anything and keep on calling as usual.

The method may then further comprise detecting (c), still during the first call, that the user of the device 1 no longer wishes to avoid disturbing said first call (for instance, because the user has disabled the mute function) and, in response, instructing (d) said network server 2 to re-enable playing the announcement message if the communication hold service is triggered.

In other words, the configuration of the server 2 is modified again, and the hold service is switched back from the embodiment "without announcement" of figure 2b to the embodiment "with announcement" of figure 2b.

This way, the server 2 will this time play the announcement in case the call is put on hold by the user of the device 1, so the other parties in the conference will hear the announcement message and understand that the user of the device 1 is temporary out of the conference.

The method can then be repeated from step (a), see figure 3.

In case no intent of the user of the device 1 to avoid disturbing said first call is detected while playing the announcement is enabled (step (a)), or in case an intent of the user of the device 1 to avoid disturbing said first call is detected while playing the announcement is already disabled (step (c)), nothing happens (no instruction is sent) and the network server 2 remains in its current state.

The instruction of step (b) and/or step (d) may be performed by sending this instruction in a dedicated message (which allows the user to prevent the playing of the announcement in real time) to the network server 2.

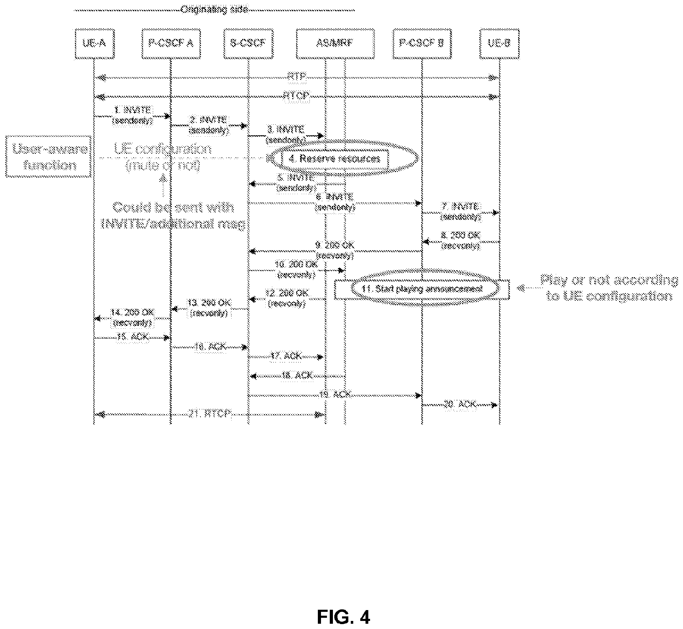

In particular, as depicted in **figure 4****,** if said communication hold service is pursuant to 3GPP TS 24.610, said network server 2 is preferably instructed to disable or re-enable playing the announcement message through a SIP INVITE request, and possibly the very SIP INVITE request sent for placing the first call on hold (1. of figures 2a, 2b and 4), saving signaling resources, see below.

In any case, thanks to the possibility of "reserving resources", the server 2 is able to save this instruction and apply it.

### Other embodiment

As explained, the method may further comprise, when receiving a second call, instructing said network server 2 to trigger the communication hold service.

Said instruction can advantageously be directly combined with the instruction to disable (or re-enable) playing an announcement message to said at least one other party 3 of said first call if the communication hold service is triggered.

In other words, at step (b) or (d), the device 1 preferably sends to network server 2 a single instruction both to trigger the communication hold service and to disable of re-enable playing the announcement message.

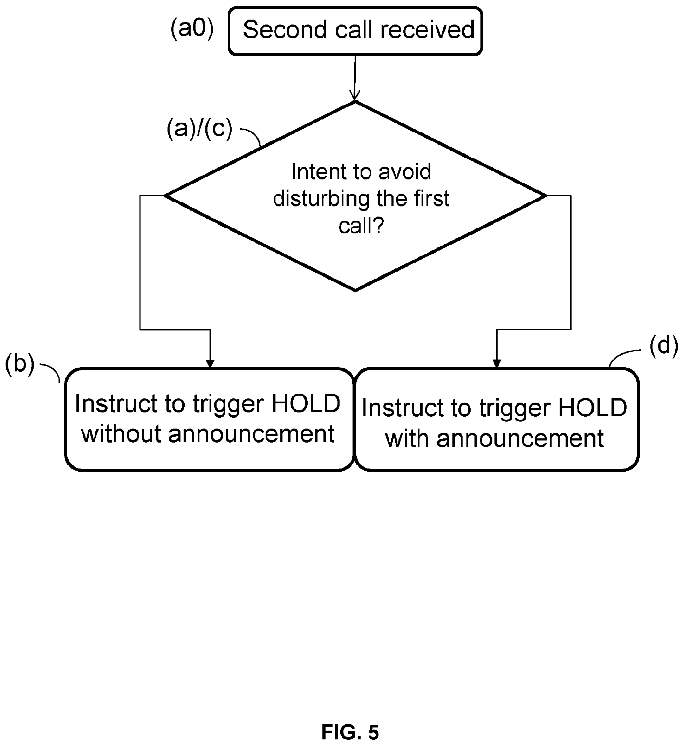

In such a case, the method may be simply triggered by an initial step (a0) of receiving the second call at the device 1, as illustrated by figure 5.

Indeed, referring now to **figure 5****,** in a common step (a)/(c) the processing unit 11 of device 1 detects (or not) an intent of a user of the device 1 to avoid disturbing said first call (for example by assessing whether the mute function is activated), and then in a common step (b)/(d) the processing unit 11 instructs the network server 2 to trigger the communication hold service with or without playing the announcement message, according to whether an intent of a user of the device 1 to avoid disturbing said first call has been detected.

As explained, said single instruction is typically implemented by a SIP INVITE request.

### Operation of the network server

As the network server 2 implements the communication hold service, if the device 1 receive the second call while still being engaged in the first call, the server 2 triggers the communication hold service and play or not the announcement message according to what it has been instructed.

Thus, according to a second aspect, the present invention proposes a method for operating the network server 2 implementing a communication hold service, performed by its processing unit 21.

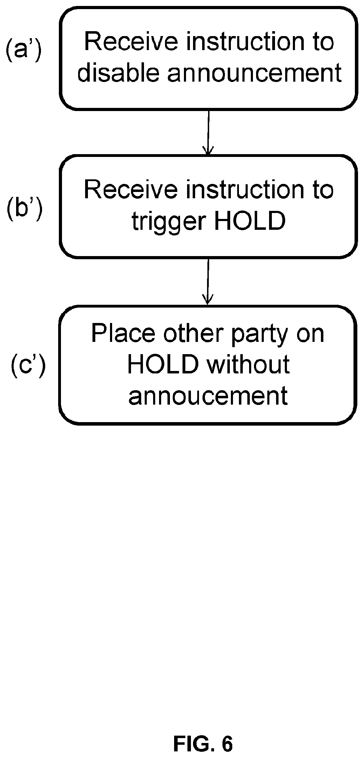

Referring to **figure 6****,** in a step (a') the processing unit 21 receives from the device 1, during an first call between the device 1 and at least one other party 3 through the network server 2, a first instruction to disable playing an announcement message to said at least one other party 3 of said first call if the communication hold service is triggered (i.e. step (b) of the method according to the first aspect).

In response, this instruction is applied by the processing unit 21 and the configuration of the network server 2 is modified accordingly.

Then, in a further step (b'), a second instruction to trigger the communication hold service is further received from the device 1, in particular because the device 1 has received a second call.

Note that, as explained previously, the instruction of steps (a') and (b") could be sent within the same SIP INVITE request.

In consequence, in a final step (c'), the processing unit 21 places said at least one other party 3 on hold, but without playing to said at least one other party 3 the announcement message.

Note that in step (a'), the processing unit 21 may also receive from the device 1, an instruction to re-enable playing an announcement message to said at least one other party 3 of said first call if the communication hold service is triggered (i.e. step (d) of the method according to the first aspect).

In such a case, in step (c') the processing unit 21 will play the announcement message to said at least one other party 3.

To summarize, at step (c'), the server 2 plays or not the announcement message according to the most recent instruction received from device 1.

In an embodiment, the network server 2 may check at step (c') that the first call is indeed a multi-party conference call before placing said at least one other party 3 on hold without playing to said at least one other party 3 the announcement message (i.e. said at least one other party 3 is placed on hold without playing, to said at least one other party 3, the announcement message only if said first call is a multiparty conference call, else the announcement message is played), so that the announcement is only disabled for an first multi-party conference call while kept enabled for an on first two-party call, where such an announcement may be less problematic.

### Device, network server and computer program

The present invention further proposes an electronic device 1 comprising a user interface 13 and a processing unit 11, adapted for carrying out the method for operating as previously described. This device 1 may also comprise a memory 12. This processing unit 11 is configured to implement the steps of:
- detecting, during a first call between the device 1 and at least one other party 3 through a network server 2 implementing a communication hold service, an intent of a user of the device 1 to avoid disturbing said first call;
- instructing said network server 2 to disable playing an announcement message to said at least one other party 3 of said first call if the communication hold service is triggered; and
- preferably instructing said network server 2 to trigger the communication hold service when a second call is received at the device 1.

The present invention further proposes a network server 2 comprising a processing unit 11, adapted for carrying out the method for operating as previously described. This server 2 may also comprise a memory 22. This processing unit 21 is configured to implement the steps of:
- receiving from a device 1, during a first call between the device 1 and at least one other party 3 through the network server 2, instruction to disable playing an announcement message to said at least one other party (3) of said first call if the communication hold service is triggered.
- receiving from the device 1, instruction to trigger the communication hold service; and
- placing said at least one other party 3 on hold without playing to said at least one other party 3 the announcement message

The present invention further proposes a computer program product, comprising code instructions for executing (in particular with a processing unit 11, 21 of the device 1 and/or the server 2) the previously described method as well as a computer-readable medium (in particular a memory 12, 22 of the device 1 and/or the server 2), on which is stored a computer program product comprising code instructions for executing said method. In particular, this computer program product may be implemented by the operating system of the device or a dedicated communication application.

## Claims

1. A method for operating a device (1), comprising the following steps of, performed by a processing unit (11) of the device (1):
detecting (a), during a first call between the device (1) and at least one other party (3) through a network server (2) implementing a communication hold service, an intent of a user of the device (1) to avoid disturbing said first call when the user has activated the mute function or when the user has not spoken for a given duration during the first call; and
instructing (b) said network server (2) to disable playing an announcement message to said other party (3) of said first call if the communication hold service is triggered by the user of the device.

2. A method according to claim 1, further comprising:
detecting (c), during said first call, that the user of the device (1) no longer wishes to avoid disturbing said first call; and
instructing (d) said network server (2) to re-enable playing the announcement message if the communication hold service is triggered.

3. A method according to any one of claims 1 to 2, wherein the method further comprises instructing said network server (2) to trigger the communication hold service when a second call is received at the device (1).

4. A method according to claim 3, comprising a prior step (a0) of receiving said second call at the device (1), which triggers performing steps (a) and (b).

5. A method according to claim 4, wherein step (b) comprises sending an instruction to said network server (2) to trigger the communication hold service with or without playing the announcement message to said other party (3) of said first call depending on the result of step (a).

6. A method according to any one of claims 1 to 5, wherein said communication hold service is pursuant to 3GPP TS 24.610, and wherein said network server (2) is a SIP application server.

7. A method according to claim 6, wherein said network server (2) is instructed to disable (b) or re-enable (d) playing the announcement message through a SIP INVITE request.

8. A method according to claims 5 and 7 in combination, wherein said SIP INVITE request for instructing to disable or re-enable playing the announcement message is the SIP INVITE request for instructing said network server (2) to trigger the communication hold service.

9. A method according to any one of claims 1 to 8, wherein said first call is a multi-party conference call.

10. A method for operating a network server (2) implementing a communication hold service, comprising the following steps of, performed by a processing unit (21) of the server (2):
receiving (a') from a device (1), during a first call between the device (1) and at least one other party (3) through the network server (2), a first instruction to disable playing an announcement message to said at least one other party (3) of said first call if the communication hold service is triggered;
subsequently receiving (b'), from the device (1), a second instruction to trigger the communication hold service; and
placing (c') said at least one other party (3) on hold without playing the announcement message to said at least one other party (3).

11. An electronic device (1) comprising a processing unit (11) configured to implement the following steps:
detecting, during a first call between the device (1) and at least one other party (3) through a network server (2) implementing a communication hold service, an intent of a user of the device (1) to avoid disturbing said first call when the user has activated the mute function or when the user has not spoken for a given duration during the first call; and
instructing said network server (2) to disable playing an announcement message to said at least one other party (3) of said first call if the communication hold service is triggered by the user of the device.

12. A network server (2) comprising a processing unit (21) configured to implement the following steps:
receiving from a device (1), during a first call between the device (1) and at least one other party (3) through the network server (2), a first instruction to disable playing an announcement message to said at least one other party (3) of said first call if the communication hold service is triggered;
subsequently receiving, from the device (1), a second instruction to trigger the communication hold service; and
placing said at least one other party (3) on hold without playing the announcement message to said at least one other party (3).

13. A computer program product, comprising code instructions for executing a method according to any one of claims 1 to 10 for operating a device (1) or a network server (2).

14. A computer-readable medium, on which is stored a computer program product comprising code instructions for executing a method according to any one of claims 1 to 10 for operating a device (1) or a network server (2).

## Patentansprüche

1. Verfahren zum Betrieb einer Vorrichtung (1), das die folgenden Schritte umfasst, die durch eine Verarbeitungseinheit (11) der Vorrichtung (1) durchgeführt werden:
Detektieren (a), während eines ersten Anrufs zwischen der Vorrichtung (1) und mindestens einer anderen Partei (3) durch einen Netzwerkserver (2), der einen Kommunikationshaltedienst implementiert, einer Absicht eines Benutzers der Vorrichtung (1), ein Stören des ersten Anrufs zu vermeiden, wenn der Benutzer die Stummschaltfunktion aktiviert hat oder wenn der Benutzer während des ersten Anrufs für eine gegebene Dauer nicht gesprochen hat; und
Anweisen (b) des Netzwerkservers (2), das Wiedergeben einer Ansagenachricht an die andere Partei (3) des ersten Anrufs zu deaktivieren, wenn der Kommunikationshaltedienst durch den Benutzer der Vorrichtung ausgelöst wird.

2. Verfahren nach Anspruch 1, das ferner umfasst:
Detektieren (c), während des ersten Anrufs, dass der Benutzer der Vorrichtung (1) nicht mehr verhindern möchte, dass der erste Anruf gestört wird; und
Anweisen (d) des Netzwerkservers (2), das Wiedergeben der Ansagenachricht erneut zu aktivieren, wenn der Kommunikationshaltedienst ausgelöst wird.

3. Verfahren nach einem der Ansprüche 1 bis 2, wobei das Verfahren ferner ein Anweisen des Netzwerkservers (2), den Kommunikationshaltedienst auszulösen, wenn ein zweiter Anruf an der Vorrichtung (1) empfangen wird, umfasst.

4. Verfahren nach Anspruch 3, das einen vorherigen Schritt (a0) des Empfangens des zweiten Anrufs an der Vorrichtung (1), der ein Durchführen von Schritten (a) und (b) auslöst, umfasst.

5. Verfahren nach Anspruch 4, wobei Schritt (b) ein Senden einer Anweisung an den Netzwerkserver (2), den Kommunikationshaltedienst mit oder ohne Wiedergeben der Ansagenachricht an die andere Partei (3) des ersten Anrufs in Abhängigkeit vom Ergebnis von Schritt (a) auszulösen, umfasst.

6. Verfahren nach einem der Ansprüche 1 bis 5, wobei der Kommunikationshaltedienst gemäß 3GPP TS 24.610 ist und wobei der Netzwerkserver (2) ein SIP-Anwendungsserver ist.

7. Verfahren nach Anspruch 6, wobei der Netzwerkserver (2) angewiesen wird, das Wiedergeben der Ansagenachricht durch eine SIP INVITE-Anforderung zu deaktivieren (b) oder erneut zu aktivieren (d).

8. Verfahren nach den Ansprüchen 5 und 7 in Kombination, wobei die SIP INVITE-Anforderung zum Anweisen, das Wiedergeben der Ansagenachricht zu deaktivieren oder erneut zu aktivieren, die SIP INVITE-Anforderung zum Anweisen des Netzwerkservers (2), den Kommunikationshaltedienst auszulösen, ist.

9. Verfahren nach einem der Ansprüche 1 bis 8, wobei der erste Anruf ein Mehrparteienkonferenzanruf ist.

10. Verfahren zum Betrieb eines Netzwerkservers (2), das einen Kommunikationshaltedienst implementiert und die folgenden Schritte umfasst, die durch eine Verarbeitungseinheit (21) des Servers (2) durchgeführt werden:
Empfangen (a'), von einer Vorrichtung (1) während eines ersten Anrufs zwischen der Vorrichtung (1) und mindestens einer anderen Partei (3) durch den Netzwerkserver (2), einer ersten Anweisung, das Wiedergeben einer Ansagenachricht an die mindestens eine andere Partei (3) des ersten Anrufs zu deaktivieren, wenn der Kommunikationshaltedienst ausgelöst wird;
anschließendes Empfangen (b'), von der Vorrichtung (1), einer zweiten Anweisung, den Kommunikationshaltedienst auszulösen; und
Halten (c") der mindestens einen anderen Partei (3) in der Warteschleife, ohne die Ansagenachricht an die mindestens eine andere Partei (3) wiederzugeben.

11. Elektronische Vorrichtung (1), die eine Verarbeitungseinheit (11) umfasst, die dazu ausgelegt ist, die folgenden Schritte zu implementieren:
Detektieren, während eines ersten Anrufs zwischen der Vorrichtung (1) und mindestens einer anderen Partei (3) durch einen Netzwerkserver (2), der einen Kommunikationshaltedienst implementiert, einer Absicht eines Benutzers der Vorrichtung (1), ein Stören des ersten Anrufs zu vermeiden, wenn der Benutzer die Stummschaltfunktion aktiviert hat oder wenn der Benutzer während des ersten Anrufs für eine gegebene Dauer nicht gesprochen hat; und
Anweisen des Netzwerkservers (2), das Wiedergeben einer Ansagenachricht an die mindestens eine andere Partei (3) des ersten Anrufs zu deaktivieren, wenn der Kommunikationshaltedienst durch den Benutzer der Vorrichtung ausgelöst wird.

12. Netzwerkserver (2), der eine Verarbeitungseinheit (21) umfasst, die dazu ausgelegt ist, die folgenden Schritte zu implementieren:
Empfangen, von einer Vorrichtung (1) während eines ersten Anrufs zwischen der Vorrichtung (1) und mindestens einer anderen Partei (3) durch den Netzwerkserver (2), einer ersten Anweisung, das Wiedergeben einer Ansagenachricht an die mindestens eine andere Partei (3) des ersten Anrufs zu deaktivieren, wenn der Kommunikationshaltedienst ausgelöst wird;
anschließendes Empfangen, von der Vorrichtung (1), einer zweiten Anweisung, den Kommunikationshaltedienst auszulösen; und
Halten der mindestens einen anderen Partei (3) in der Warteschleife, ohne die Ansagenachricht an die mindestens eine andere Partei (3) wiederzugeben.

13. Computerprogrammprodukt, das Codeanweisungen zum Ausführen eines Verfahrens nach einem der Ansprüche 1 bis 10 zum Betrieb einer Vorrichtung (1) oder eines Netzwerkservers (2) umfasst.

14. Computerlesbares Medium, auf dem ein Computerprogrammprodukt gespeichert ist, das Codeanweisungen zum Ausführen eines Verfahrens nach einem der Ansprüche 1 bis 10 zum Betrieb einer Vorrichtung (1) oder eines Netzwerkservers (2) umfasst.

## Revendications

1. Procédé de fonctionnement d'un dispositif (1), comprenant les étapes suivantes, exécutées par une unité de traitement (11) du dispositif (1) :
détection (a), au cours d'un premier appel entre le dispositif (1) et au moins un autre correspondant (3) par l'intermédiaire d'un serveur réseau (2) mettant en œuvre un service de mise en attente de communication, d'une intention d'un utilisateur du dispositif (1) d'éviter de perturber ledit premier appel lorsque l'utilisateur a activé la fonction silence ou que l'utilisateur n'a pas parlé pendant une durée déterminée durant le premier appel ; et
instruction (b) audit serveur de réseau (2) de désactiver la lecture d'un message d'annonce audit autre correspondant (3) dudit premier appel si le service de mise en attente de communication est déclenché par l'utilisateur du dispositif.

2. Procédé selon la revendication 1, comprenant en outre :
la détection (c), au cours dudit premier appel, du fait que l'utilisateur du dispositif (1) ne souhaite plus éviter de perturber ledit premier appel ; et
la commande (d) dudit serveur de réseau (2) pour qu'il réactive la lecture du message d'annonce si le service de mise en attente de communication est déclenché.

3. Procédé selon l'une quelconque des revendications 1 à 2, dans lequel le procédé comprend en outre la commande dudit serveur de réseau (2) pour qu'il déclenche le service de mise en attente de communication lorsqu'un second appel est reçu au niveau du dispositif (1).

4. Procédé selon la revendication 3, comprenant une étape préalable (a0) de réception dudit second appel au niveau du dispositif (1), qui déclenche l'exécution des étapes (a) et (b) .

5. Procédé selon la revendication 4, dans lequel l'étape (b) comprend l'envoi d'une instruction audit serveur de réseau (2) pour qu'il déclenche le service de mise en attente de communication avec ou sans lecture du message d'annonce audit autre correspondant (3) dudit premier appel en fonction du résultat de l'étape (a).

6. Procédé selon l'une quelconque des revendications 1 à 5, dans lequel ledit service de mise en attente de communication est conforme à la norme 3GPP TS 24.610, et dans lequel ledit serveur de réseau (2) est un serveur d'application SIP.

7. Procédé selon la revendication 6, dans lequel ledit serveur de réseau (2) reçoit l'instruction de désactiver (b) ou de réactiver (d) la lecture du message d'annonce par l'intermédiaire d'une demande INVITE SIP.

8. Procédé selon les revendications 5 et 7 prises en combinaison, dans lequel ladite demande INVITE SIP pour commander la désactivation ou la réactivation de la lecture du message d'annonce est la demande INVITE SIP pour commander audit serveur de réseau (2) de déclencher le service de mise en attente de communication.

9. Procédé selon l'une quelconque des revendications 1 à 8, dans lequel ledit premier appel est un appel de conférence à plusieurs correspondants.

10. Procédé de fonctionnement d'un serveur réseau (2) mettant en œuvre un service de mise en attente de communication, comprenant les étapes suivantes, exécutées par une unité de traitement (21) du serveur (2) :
réception (a') en provenance d'un dispositif (1), au cours d'un premier appel entre le dispositif (1) et au moins un autre correspondant (3) par l'intermédiaire du serveur réseau (2), d'une première instruction pour désactiver la lecture d'un message d'annonce audit au moins un autre correspondant (3) dudit premier appel si le service de mise en attente de communication est déclenché ;
réception ultérieure (b'), en provenance du dispositif (1), d'une deuxième instruction pour déclencher le service de mise en attente de communication ; et
mise en attente (c') dudit au moins un autre correspondant (3) sans lire le message d'annonce audit au moins un autre correspondant (3).

11. Dispositif électronique (1) comprenant une unité de traitement (11) configurée pour mettre en œuvre les étapes suivantes :
détection, au cours d'un premier appel entre le dispositif (1) et au moins un autre correspondant (3) par l'intermédiaire d'un serveur réseau (2) mettant en œuvre un service de mise en attente de communication, d'une intention d'un utilisateur du dispositif (1) d'éviter de perturber ledit premier appel lorsque l'utilisateur a activé la fonction silence ou que l'utilisateur n'a pas parlé pendant une durée déterminée durant le premier appel ; et
instruction audit serveur de réseau (2) de désactiver la lecture d'un message d'annonce audit au moins un autre correspondant (3) dudit premier appel si le service de mise en attente de communication est déclenché par l'utilisateur du dispositif.

12. Serveur réseau (2) comprenant une unité de traitement (21) configurée pour mettre en œuvre les étapes suivantes :
réception en provenance d'un dispositif (1), au cours d'un premier appel entre le dispositif (1) et au moins un autre correspondant (3) par l'intermédiaire du serveur réseau (2), d'une première instruction pour désactiver la lecture d'un message d'annonce audit au moins un autre correspondant (3) dudit premier appel si le service de mise en attente de communication est déclenché ;
réception ultérieure, en provenance du dispositif (1), d'une deuxième instruction pour déclencher le service de mise en attente de communication ; et
mise en attente dudit au moins un autre correspondant (3) sans lire le message d'annonce audit au moins un autre correspondant (3).

13. Produit de programme informatique, comprenant des instructions de code pour l'exécution d'un procédé selon l'une quelconque des revendications 1 à 10 pour le fonctionnement d'un dispositif (1) ou d'un serveur réseau (2).

14. Support lisible par ordinateur, sur lequel est stocké un produit de programme informatique comprenant des instructions de code pour l'exécution d'un procédé selon l'une quelconque des revendications 1 à 10 pour le fonctionnement d'un dispositif (1) ou d'un serveur réseau (2).
